# NEW EUROPEAN PATENT SPECIFICATION

(11) **EP 1 218 209 B2**
(45) Date of publication and mention of the opposition decision: **04.07.2007**
(45) Mention of the grant of the patent: 11.02.2004
(21) Application number: 00969663.4
(22) Date of filing: 04.10.2000
(51) Int. Cl.: B60J 5/04

(54) **A Motor Vehicle Assembly and a Method of Assembling Same**
Kraftfahrzeugtür und Verfahren zu deren Zusammenbau
Ensemble de porte d'automobile et son procédé d'assemblage

(30) Priority: 07.10.1999 GB 9923588
(43) Date of publication of application: 03.07.2002
(73) Proprietor: Land Rover Group Limited, St. Helier, Jersey JE4 9WG (GB)
(72) Inventor: FAWDREY, David, Charles, Kidlington, Oxford OX5 2LF (GB)
(74) Representative: Gicquel, Olivier Yves Gérard
(86) International application number: PCT/GB2000/003791
(87) International publication number: WO 2001/025039

(56) References cited:
- EP-A- 0 416 208
- EP-A- 0 694 427
- EP-A- 0 839 979
- EP-B- 0 637 521
- WO-A-96/30226
- WO-A-98/50658
- DE-A- 3 521 678
- DE-A- 4 243 952
- DE-A- 19 509 282
- DE-A- 19 528 467
- DE-A- 19 537 504
- DE-A- 19 650 531
- DE-A- 19 709 835
- DE-A- 19 723 642
- DE-A- 19 747 710
- DE-A- 19 802 478
- DE-C- 3 004 897
- DE-C- 19 511 105
- DE-C- 19 707 850
- DE-U- 29 808 834
- FR-A- 2 762 262
- US-A- 4 662 115
- US-A- 5 351 443
- US-A- 5 379 553
- US-A- 5 430 977

## Description

The present invention relates to a motor vehicle door assembly and a method of assembling a door assembly.

A motor vehicle door assembly typically comprises an outer door panel, an inner door panel and an interior trim panel to provide a decorative finish to the inner door panel. The outer door panel and the inner door panel are joined together by any convenient means so as to define a cavity therebetween. The inner door panel has a number of large apertures formed therein to allow for the insertion and attachment of a window lift mechanism within the cavity.

The window lift mechanism is attached to fixing points located within the cavity and is adapted to move a window pane between a raised position and a lowered position.

An impervious flexible membrane or water shedder is interposed between the inner door panel and the interior trim panel to prevent moisture and water escaping through the apertures in the inner door panel so as to stain or damage the interior trim panel.

A typical window lift mechanism is shown in EP 0 839 979-A, the window lift mechanism comprises two separate guide rails which are secured to fixings within the cavity. The guide rails define a guide path for carrier means to which a window pane is secured at a lower edge thereof. The carrier means are driven along the guide rails by a cable linkage driven by a motor or in some cases a manual operated winder device. Movement of the carrier means causes the window pane to move upwards or downwards within the cavity to raise or lower the window pane as the carrier means are moved along the guide rails.

It is further known from WO-A-96/30226 (corresponding to the preamble of claim 1) to provide a motor vehicle door assembly having an inner door panel defining a large aperture and an outer door panel joined together to define a cavity, a window lift assembly comprising a window lift mechanism and a support structure for connecting the window lift mechanism to the inner door panel, the window lift mechanism having two carrier means for connection in use to a lower edge of a window pane and two elongate guide rails which, in use, are located within the cavity and are provided to guide the carrier means between raised and lowered positions

With such prior art constructions it is necessary for at least one large aperture to be formed in the inner door panel so as to allow the window lift mechanism to be installed in the cavity and secured thereto.

This has the disadvantage that the door assembly is considerably weakened by the existence of such a large aperture and as a consequence cross members often have to be attached within the cavity to strengthen the door assembly.

Because of the size of the aperture in the inner door panel the water shedder has to be relatively large so as to cover the aperture and so the water shedder is relatively expensive. It is also a problem that the water shedder has to be attached to inner panel and this can be a problem if the window lift mechanism has to be repaired at a later time as the water shedder is often damaged when it is removed and this can result in leakage after re-assembly.

It is an object of this invention to overcome or minimise the problems noted above.

According to a first aspect of the invention there is provided a motor vehicle door assembly as defined in claim 1.

The aperture may be irregular in shape and be considerably longer than it is wide.

Preferably, the or each guide rail is longer than the central portion of the support structure.

Advantageously, the or each guide rail and the support structure may be formed as a single integral part.

There may be two guide rails joined together by the support structure.

Preferably, both of the guide rails extend beyond upper and lower edges of the central portion of the support structure.

Advantageously, a sealing means may be provided to form a seal between the support structure and the inner door panel.

According to a second aspect of the invention there is provided a method of assembling a motor vehicle door assembly as defined in claim 8.

The invention will now be described, by way of example with reference to the accompanying drawing in which:-
- Figure 1: is a pictorial representation of a motor vehicle incorporating a motor vehicle door assembly according to the invention;
- Figure 2: is a plan view of a window lift assembly forming part of the motor vehicle door assembly shown in Fig. 1;
- Figure 2b: is a cross-section along the line ii-ii on Fig.2;
- Figure 3: is a side view in the direction of arrow 'X' of the window lift assembly shown in Fig. 2;
- Figure 4: is a side view of a door structure forming part of the door assembly shown in Fig. 1 when viewed from a normally inwardly facing side of the door assembly;
- Figure 5: is a cross-section along the line iv-iv;
- Figure 6: is a view similar to that shown in Fig. 4 but showing a first step in the process of assembling the window lift assembly to the door structure;
- Figure 7: is a view similar to that shown in Fig. 6 but showing a further step in the process of assembling the window lift assembly to the door structure;
- Figure 8: is a view similar to that shown in Fig. 7 but showing the window lift assembly attached in its fully assembled state to the door structure;
- Figure 9: is a cross-section along the line v-v on Fig. 8 showing the window lift assembly in its fully assembled state;
- Figure 10: is a side view of a window lift assembly forming part of a door assembly according to a second embodiment of the invention;
- Figure 11: is a plan view of the window lift assembly shown in Fig. 10;
- Figure 12: is a side view of a door structure forming part of a door assembly according to the second embodiment of the invention when viewed from a normally inwardly facing side of the door assembly;
- Figure 13: is a plan view of a third embodiment of a window lift assembly according to the invention;
- Figure 14: is a side view of the window lift assembly shown in Fig. 13;
- Figure 15: is a pictorial representation of part of a window lift assembly according to a fourth embodiment of the invention; and
- Figure 16: is cross-section through part of a door structure showing the window lift assembly of Fig. 14 attached to an inner door panel.

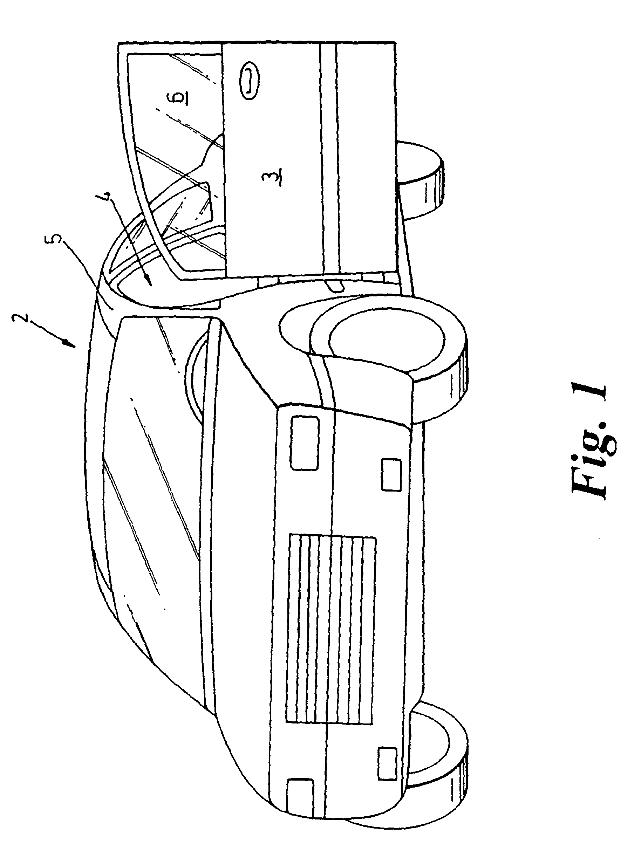

With reference to Fig. 1 there is shown a motor vehicle 2 having a door assembly 3 to allow access to an interior of the motor vehicle 2 through a door aperture 4 formed in a body structure 5 of the motor vehicle 2. A window pane 6 is movable by a window lift mechanism (not shown) forming part of the door assembly 3.

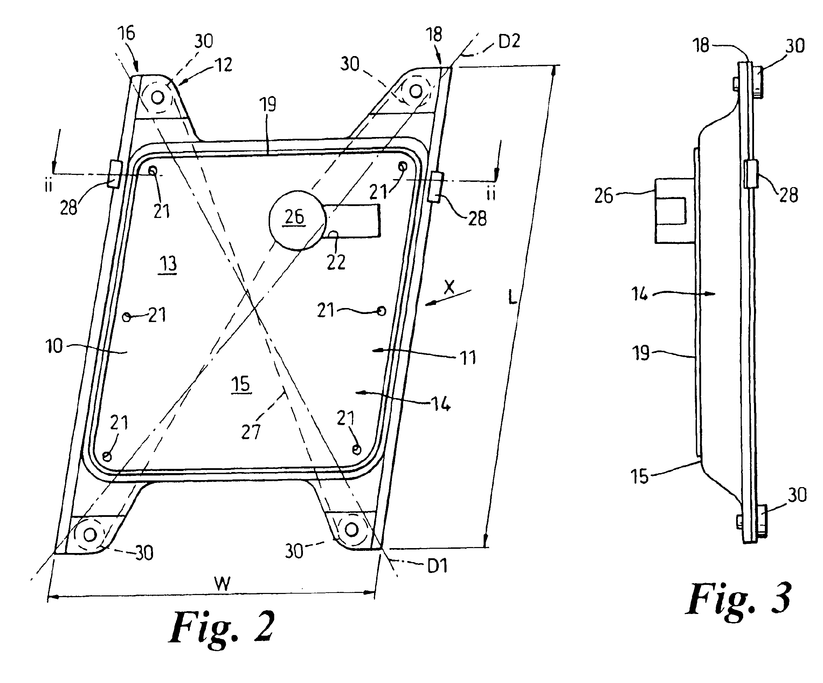

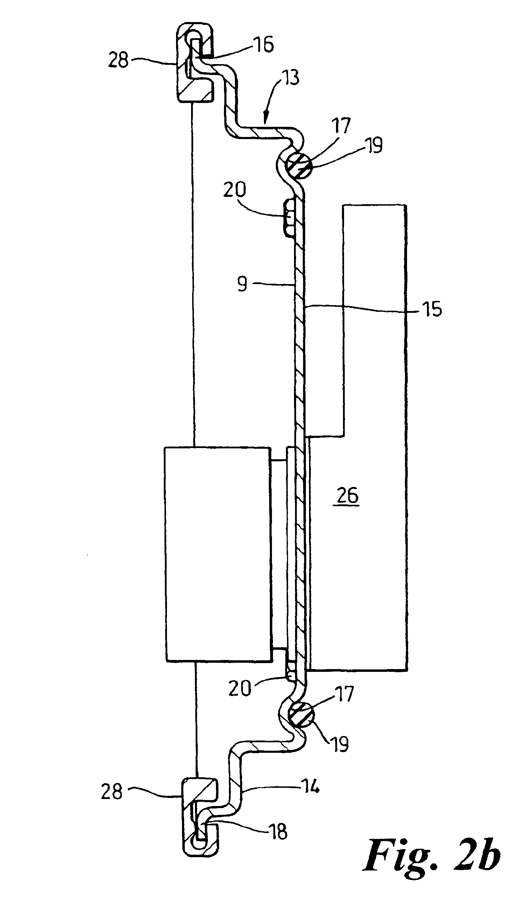

With reference to Figures 2 to 9 there is shown a door structure 8 forming part of the door assembly 3. The door structure 8 comprises an outer door panel 32 and an inner door panel 31 which are joined together at their edges by clinching the outer door 32 onto the inner door panel 31. The outer and inner door panels 32, 31 define a cavity 34 therebetween in which a window lift mechanism 12 is accommodated in use to move the window pane 6. The inner door panel 31 has an inner surface within the cavity 34 and an outer surface outside of the cavity.

The inner door panel 31 has an irregular shaped aperture 33 formed therein of approximately rectangular shape the length 'H' of the aperture being greater than the width 'B' of the aperture. In addition, the diagonal lengths d1 and d2 are both greater than either 'H' or 'B'.

The inner door panel 31 is deformed in the region of the aperture 33 to form a flange 36 encircling the aperture 33. This deformation stiffens the inner door panel 31 particularly in the region of the aperture 33 and forms a flat abutment surface 37 on the inner surface of the inner door panel 31. A number of holes 7 are formed in the inner door panel 31 on tabs 35 which project inwardly from the periphery of the aperture 33.

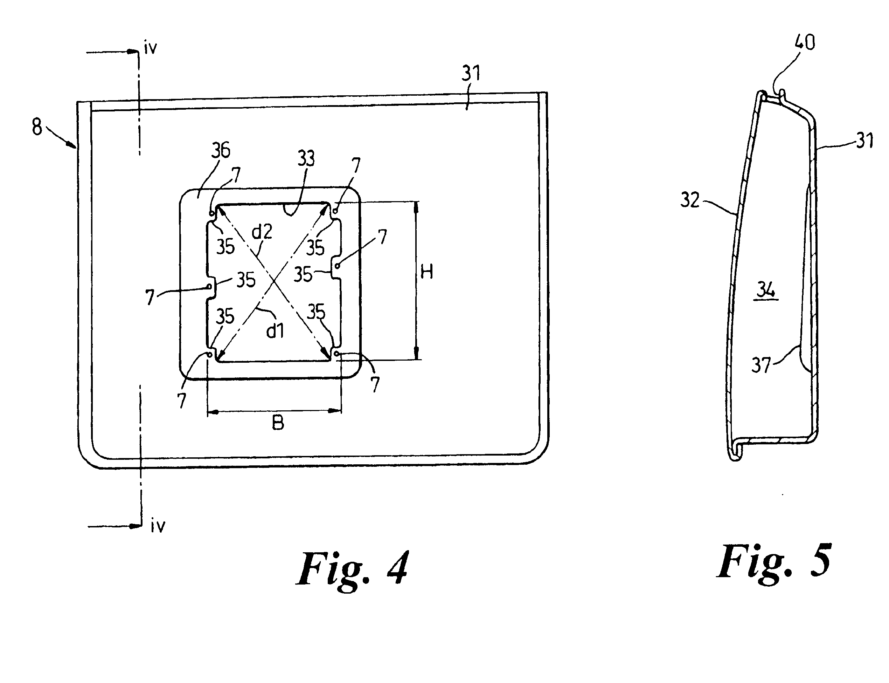

With particular reference to Figs. 2, 2b and 3 there is shown a window lift assembly 11 comprising the window lift mechanism 12, and a support structure 13.

The support structure 13 is formed from a single piece of sheet steel by pressing into the required shape and has a central body portion 14 bounded along one longitudinal edge by an outwardly facing lip forming a first guide rail 16 and along a second opposing longitudinal edge by a second outwardly facing lip forming a second guide rail 18. The guide rails 16, 18 and the central body portion 14 are therefore formed as a single integral part.

The length 'L' of the guide rails 16, 18 is greater than the transverse width 'W' between the outer edges of the guide rails 16, 18 and they are longer than the support structure 13. Both of the guide rails 16, 18 extend beyond upper and lower edges of the central portion 14 of the support structure 13. An imaginary line drawn around the periphery of the window lift assembly 11 defines a parallelogram having diagonals 'D1' and 'D2' of differing length.

The guide rails 16, 18 are also longer than the length 'H' or width 'B' of the aperture 33.

The central body portion 14 is dished so as to increase the torsional and bending stiffness of the support structure 13 and has a substantially flat central portion 15 which is offset from the plane on which the two guide rails 16, 18 lie.

A front face 10 of the central portion 15 has a peripherally extending indentation 17 formed therein to locate a peripherally extending sealing means in the form of a seal 19. The seal 19 maybe bonded to the front face 10, or as shown is extruded directly into the indentation 17.

The central portion 15 has six holes 21 formed therein used to secure the window lift assembly 11 to an inner door panel 31 forming part of the door assembly 3. The holes 21 are all located within an area of the central portion 15 bounded by the peripherally extending seal 19. Fastening means in the form of threaded nuts 20 are attached by welding to a back face 9 of the central portion 15. The nuts 20 are aligned with the holes 21.

An aperture 22 is formed in the central portion 15 used to attach a motor and drive assembly 26 forming part of the window lift mechanism 12 to the support structure 13. However it will be appreciated that when the motor and drive assembly 26 is installed and fastening means are engaged with the nuts 20 the central portion 15 forms an unperforated or imperforate membrane which can prevent the transmission of water between opposite sides of the central portion 15.

The aperture 33, is positioned relative to the edges of the cavity 34 as defined by the inner surface of the inner door panel 31 and a corresponding inner surface of the outer door panel 32 so as to allow the guide rails 16, 18, when located within the cavity 34, to be rotated about an axis that is substantially normal to the inner door panel 31.

The window lift mechanism 12 comprises a motor and drive assembly 26, a cable drive 27 (shown in hidden detail on Fig. 2) and two carrier means 28 connected to the cable drive 27 and slidingly engaged upon the guide rails 16, 18. Each of the carrier means 28 is provided with a U-shaped connector means 29 used to connect the carrier means 27 to the window pane 6 at a lower edge thereof. The cable drive 27 extends around carrier wheels 30 rotatably connected to the support structure 13 by means of large headed rivets 32.

Operation of the motor and drive assembly 26 causes the carrier means 28 to be moved along the guide rails 16, 18 by the cable drive 27. The direction of movement of the carrier means 28 depends upon the mode of operation of the motor and drive assembly 26 which is controlled by a switch (not shown) connected to a source of electrical power (not shown).

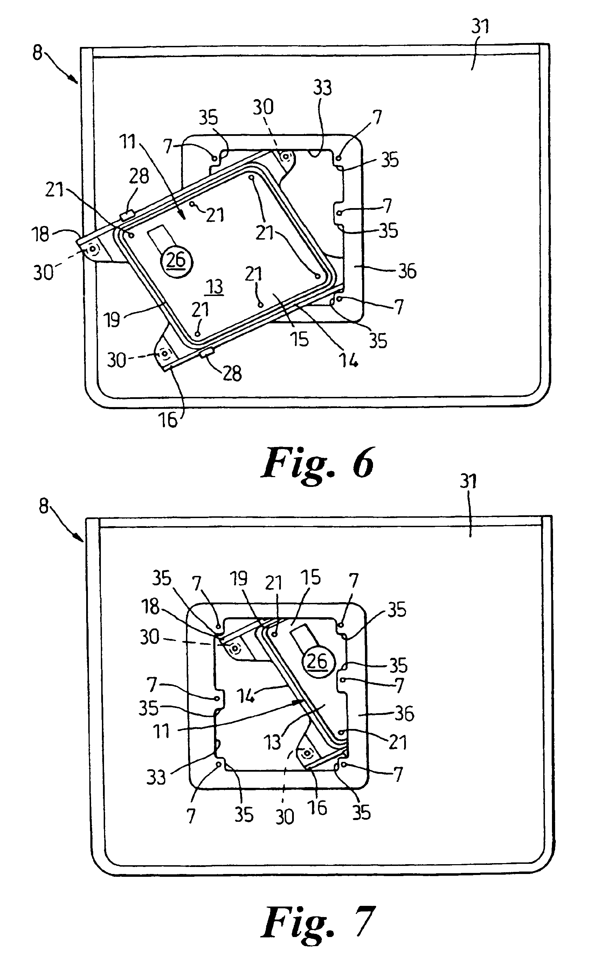

With particular reference to Figs. 6 to 8 there is shown a process for assembling the window lift assembly 11 to the inner door panel 31.

The first step is to engage the ends of the guide rails 16, 18 farthest away from the motor and drive assembly 26 with the aperture 33 as shown in Fig. 6. The window lift assembly 11 is gripped by means of the motor and drive assembly 26 and is tilted and rotated to allow it to be inserted through the aperture 33.

Preferably, the support structure is tilted and rotated such that a transverse axis normal to the guide rails 16, 18 lies substantially parallel to one of the diagonals d1, d2 this allows the length 'H' of the aperture 33 to be kept to a minimum.

In this context rotation means rotation about an axis arranged substantially normal to the outer surface of the inner door panel 31 and tilting means movement about an axis arranged substantially parallel to the general outer surface of the inner door panel 31.

Then taking advantage of the depth of the cavity 34, the window lift assembly 11 is slid longitudinally along a longitudinal axis arranged parallel to the guide rails 16, 18 into the cavity 34 until all of the window lift assembly 11 with the exception of the motor and drive assembly has passed through the aperture 33 into the cavity 34.

The guide rails 16, 18 and the central body portion 14 now lie within the cavity 34 such that the seal 19 faces the inner surface of the inner door panel 31.

The window lift assembly is then moved back in the opposite direction and rotated within the cavity 34 until the longitudinal axis of the window lift assembly 11 is aligned with a longitudinal axis of the aperture 33.

The window lift assembly 11 is then moved towards the inner surface of the inner door panel 31 until the seal 19 is brought into abutment with the abutment surface 37 formed on the flange 36. In this orientation the seal 19 at all positions around its periphery lies outside of the aperture 33.

The window lift assembly 11 is then secured to the inner door panel 31 by means of threaded fasteners such as bolts or, as shown, cap headed screws 38 which are inserted through the holes 7 in the inner door panel 31 and the holes 21 in the central portion 15 for threaded engagement with the nuts 20. Tightening the cap headed screws 38 causes the seal 19 to be compressed against the abutment surface 37 thereby forming a water impermeable seal therebetween.

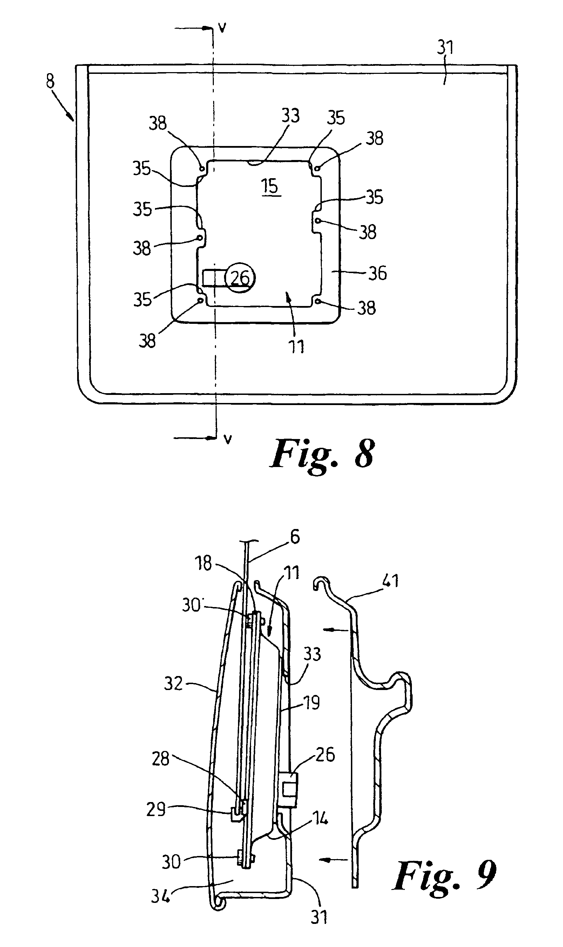

To complete assembly of the door assembly the window pane 6 is inserted through an elongate aperture 40 defined by the upper edges of the inner and outer door panels 31, 32 and slid into engagement with the connector means 29. An interior trim panel 41(as shown in Fig. 9) is then attached to the outer door panel 31 to complete the door assembly 3.

The result of this assembly method is that a window lift assembly 11 of greater dimensions than the aperture 33 in the inner door panel 31 may be used but the aperture 33 can be smaller than would normally be needed to assemble a window lift mechanism in the cavity. In addition a door assembly constructed and assembled in this manner is stiffer than would normally be the case, and provides a better resistance to the transmission of noise than a conventional door assembly.

In addition, the use of a sealing means forming part of the window lift assembly means that a separate water shedder is no longer required, since the sealing means gives a good quality water barrier this is advantageous both from cost and assembly time perspectives.

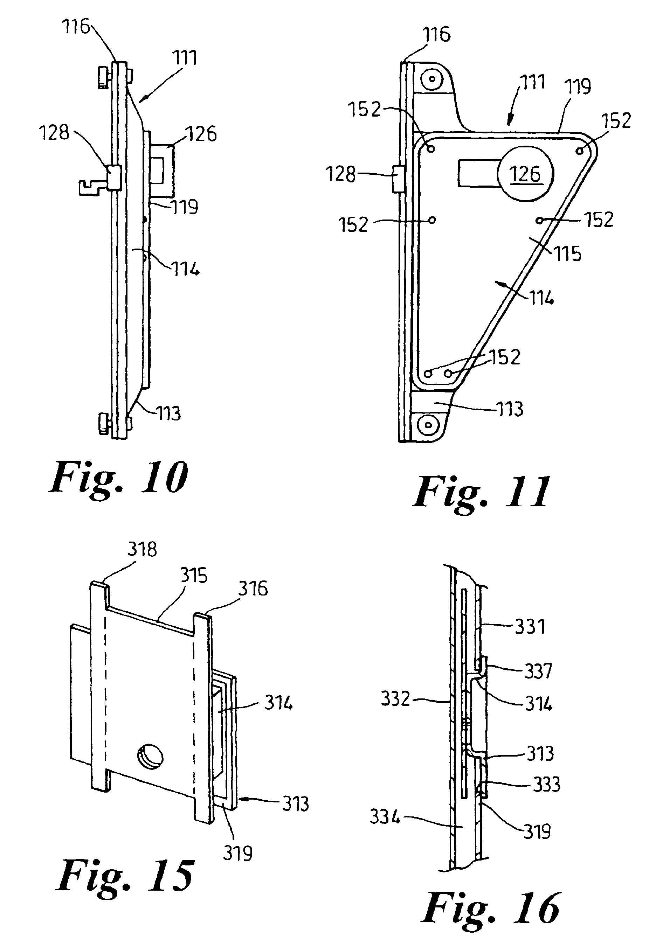

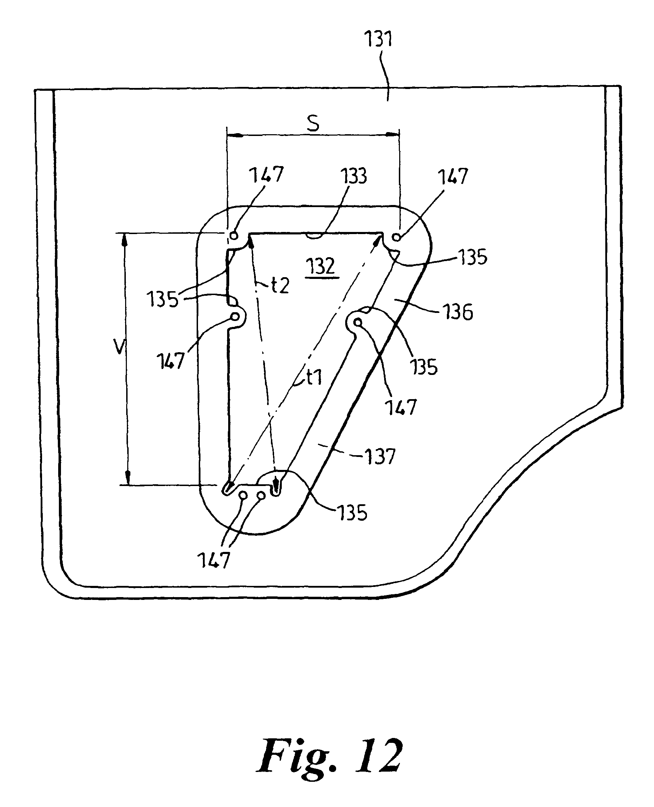

With particular reference to Figs. 10, 11 and 12 there is shown a second embodiment of a door assembly in accordance with the present invention.

The door assembly is in many respects similar to that described above but is particularly suitable for use as a rear door assembly. The door assembly includes a door structure formed by inner and outer door panels 131, 132 which are joined together around their outer periphery to define a cavity in which a window lift mechanism is located in use.

The window lift assembly 111 comprises a support structure 113 and the window lift mechanism supported by the support structure 113.

The window lift mechanism includes a motor and drive assembly 126 connected to a carrier means 128 by means of a flexible cable (not shown). Operation of the motor and drive assembly 126 moves the cable and hence causes the carrier means 128 to be moved along a guide rail 116 with which the carrier means 128 is engaged.

The support structure 113 comprises a body portion 114 and the guide rail 116 extending longitudinally along one edge of the body portion 114. The guide rail 116 and the body portion 114 are formed as a single integral part by pressing from sheet steel. The body portion 114 is slightly dished to improve its stiffness and has a flat unperforated surface 115 that lies on a plane that is offset from the guide rail 116. The guide rail 116 is longer than the support structure and extends beyond upper and lower edges of the body portion 114.

A seal 119 is bonded to the flat surface 115 and a number of holes 152 are formed in the body portion 114 for use in securing the window lift assembly 111 to the inner door structure 131 as will be described below.

The guide rail 116 is slightly curved when viewed from the side to provide correct movement of a window pane (not shown) when it is attached to the carrier means 128 slidingly engaged with the guide rail 116.

The inner door panel 131 has an irregular shaped aperture 133 formed therein of truncated triangular shape, the length 'V' of the aperture being greater than the maximum width 'S' of the aperture. In addition, the diagonal lengths t1 and t2 are both greater than either 'V' or 'S'.

The inner door panel 131 is deformed in the region of the aperture 133 to form a flange 136 encircling the aperture 133. This deformation stiffens the inner door panel 131, particularly in the region of the aperture 133, and forms a flat abutment surface 137 on an inner surface of the inner door panel 131.

A number of holes 147 are formed in the inner door panel 131 on tabs 135 which project inwardly from the periphery of the aperture 133.

The body portion 114 is of greater dimensions than the aperture 133 in the inner door panel 131 and has a seal 119 bonded thereto for co-operation in use with the abutment surface 137 so as to provide a water impermeable seal therebetween. When the window lift assembly 111 is secured in position the seal 119 lies outside of the aperture 133 at all positions around its outer periphery.

To secure the window lift assembly 111 to the door structure the window lift assembly 111 is tilted and rotated such that the guide rail 116 lies substantially normal to one of the diagonals t1, t2 and is then inserted though the aperture 133. The motor and drive assembly 126 is used as a hand grip to assist with insertion of the window lift assembly 111.

After manoeuvring the window lift assembly 11 through the aperture 133 it is rotated and moved towards the inner door panel 131 to bring the seal 119 into contact with the abutment surface 137. The window lift assembly is then secured to the inner door panel 131 by means of threaded fixings (not shown) which extend through the holes 147, 152 to engage nuts as described for the first embodiment described above.

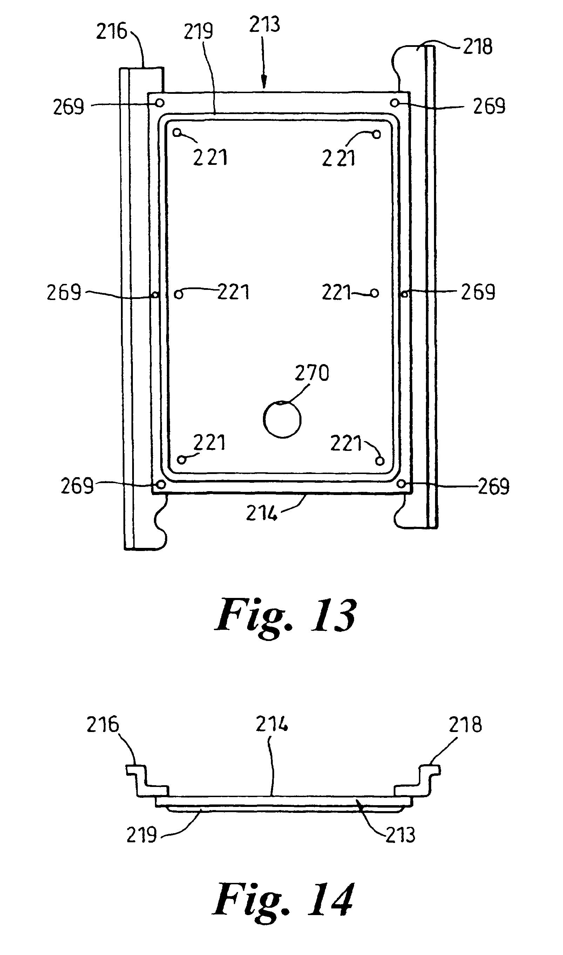

With particular reference to Figs. 13 and 14 there is shown an alternative construction of support structure for a window lift assembly which in all other respects is similar to and can be used as a replacement for that shown in Figs. 2 to 9. In this case the support structure 213 is constructed from two separate steel guide rails 216, 218 which are attached to a pressed steel central body portion 214 by a number of spot welds 269. As before, a seal 219 is attached to the central body portion 214 and holes 221 are provided to enable the support structure 213 to be connected to an inner door structure as described with reference to Figs. 2 to 9.

With reference to Figs 15 and 16 there is shown part of a window lift assembly that is different from that described above in that part of the imperforate unperforated portion lies outside the cavity 334 defined between respective inner and outer door panels 331 and 332.

The guide rails 316, 318 are joined together by a flat plate 315 to form a subassembly that is attached to a dished support member 314 to form a support structure 313. The support member 314 forms an imperforate or unperforated membrane and has a flange portion 337 that is larger than the aperture 333 and which is used to close off the aperture when the window lift assembly 311 is secured in position for use.

The above embodiments are examples and other variations are possible. For example, although the support structures described above are all made from steel they could be made from any suitable metal or from an engineering plastics material by moulding or extrusion.

Similarly the type of fixings used to secure the support structures to the inner door panel could be of any type that are able to provide sufficient clamping force to provide a seal between the window lift assembly and the inner door panel and provide a rigid enough connection to allow the window lift mechanism to function correctly. For example self clinching rivets such as "PoP" rivets _{Reg TM} could be used.

It will appreciated that forming a complete window lift assembly that can then be easily attached to a door structure is very advantageous because the window lift mechanism can be tested prior to assembly and because the window lift assembly as a single component is easier to handle. It is also advantageous to form the guide rails and the support structure as a single component because the alignment of the rails can then be accurately determined and to produce such a structure is relatively quick and economical.

## Claims

1. A motor vehicle door assembly comprising an inner door panel (31, 131,331) defining an aperture (33, 133, 333) and an outer door panel (32, 132) joined together to define a cavity (34,334), a window lift assembly (11, 111, 211) comprising a window lift mechanism having at least one carrier means (28, 128) for connection in use to a lower edge of a window pane (6) and at least one elongate guide rail (16, 18; 116; 216, 218; 316, 318), the or each of which is, in use, located within the cavity (34,334) for guiding the carrier means (28, 128) along the length of the or each elongate guide rail (16, 18; 116; 216, 218; 316, 318), between raised and lowered positions and a support structure (13, 113, 313) for connecting the window lift mechanism to the inner door panel (31, 131, 331) and having a substantially imperforate or unperforated portion used to close off the aperture (33, 133, 333) when the window lift assembly (11, 111, 211) is secured to the inner door panel (31, 131, 331), **characterised in that** the length of the or each elongate guide rail (16, 18; 116; 216, 218; 316, 318) is greater than the maximum dimension in any direction of the aperture (33, 133, 333) which allows for the insertion of the window lift assembly (11, 111, 211) within the cavity (34,334) and attachment of the support structure (13, 113, 313) to -the inner door panel (31, 131, 331) and that the said aperture (33, 133, 333) is positioned relative to the edges of the cavity (34, 334) so as to allow the or each guide rail (16, 18; 116; 216, 218; 316, 318) and the support structure (13, 113, 313) to be rotated within the cavity (34, 334) about an axis that is substantially normal to the inner door panel (31, 131, 331).

2. A door assembly as claimed in claim 1 in which the aperture (33, 133, 333) is irregular in shape and is considerably longer than it is wide.

3. A door assembly as claimed in any preceding claim in which the or each guide rail (16, 18; 116; 216, 218; 316, 318) is longer than a central portion (14, 114, 214, 314) of the support structure (13, 113, 213, 313).

4. A door assembly as claimed in any preceding claim in which the or each guide rail (16, 18; 116; 216, 218; 316, 318) and the support structure (13, 113, 213, 313) are formed as a single integral part.

5. A door assembly as claimed in any preceding claim in which there are two guide rails (16, 18; 216, 218; 316, 318) joined together by the support structure (13, 213,313).

6. A door assembly as claimed in claim 5 in which both of the guide rails (16, 18; 216, 218; 316, 318) extend beyond upper and lower edges of the central portion (14, 114, 214, 314) of the support structure (13, 113, 213, 313).

7. A door assembly as claimed in any preceding claim in which a sealing means (19, 119, 219, 319) is provided to form a seal between the support structure (13, 113, 213, 313) and the inner door panel (31, 131, 331).

8. A method of assembling a motor vehicle door as claimed in any of claims 1 to 7 **characterised in that** the method comprises the steps of:
(i)- providing an inner door panel (31, 131,331) defining an aperture (33, 133, 333) and an outer door panel (32, 132),
(ii)- joining together the outer door panel (32, 332) and the inner door panel (31, 131, 331) to define a cavity (34, 334) therebetween;
(iii)- providing a window lift assembly (11, 111, 211) comprising a window lift mechanism having at least one carrier means (28, 128) for connection in use to a lower edge of a window pane (6) and at least one elongate guide rail (16, 18; 116; 216, 218, 316, 318), and comprising a support structure (13, 113, 313) for connecting the window lift assembly (11,111,211) to the inner door panel (31,131,331) and having a substantially imperforate or unperforated portion, the length of the or each elongate guide rail (16, 18; 116; 216, 218; 316, 318) being greater than the maximum dimension in any direction of the aperture (33, 133, 333) which allows for the insertion of the window lift assembly (11, 111, 211) within the cavity (34,334) and attachment of the support structure (13, 113, 313) to the inner door panel (31, 131, 331), the aperture (33, 133, 333) being positioned relative to the edges of the cavity (34, 334) so as to allow the or each guide rail (16, 18; 116; 216, 218; 316, 318) and the support structure (13, 113, 313) to be rotated within the cavity (34, 334) about an axis that is substantially normal to the inner door panel (31, 131, 331),
(iv)- inserting the or each guide rail (16, 18;116; 216, 218; 316, 318) and the support structure (13, 113, 213, 313) through the aperture (33, 133, 333) formed in the inner door panel so as to locate all of the window lift assembly (11,111), with the exception of the motor and drive assembly (126), within the cavity (34, 334);
(v)- rotating the or each guide rail (16, 18; 116; 216, 218; 316, 318) and the support structure (13, 113, 213, 313) from the angle at which they are inserted through the aperture into an in use position; and
(vi)- securing the window lift assembly (11,111) to the inner door panel (31, 131, 331) by means of the support structure (13, 113, 213, 313) so as to close off the aperture (33, 133, 333).

## Patentansprüche

1. Kraftfahrzeugtüranordnung, die ein Türinnenblech (31, 131, 331), das eine Öffnung (33, 133, 333) definiert, und ein damit zur Definition eines Hohlraums (34, 334) verbundenes Türaußenblech (32, 132), eine Fensterhebeanordnung (11, 111, 211) mit einem Fensterhebemechanismus, der mindestens ein Trägermittel (28, 128), das im Gebrauch mit einem unteren Rand einer Fensterscheibe (6) verbunden wird, und mindestens eine längliche Führungsschiene (16, 18; 116; 216, 218; 316, 318) umfasst, die (jeweils) im Gebrauch im Hohlraum (34, 334) angeordnet ist (sind) und zum Führen des Trägermittels (28, 128) entlang der Länge der oder jeder länglichen Führungsschiene (16, 18; 116; 216, 218; 316, 318) zwischen einer angehobenen und einer abgesenkten Position vorgesehen ist (sind), und eine Stützstruktur (13, 113, 313) zur Verbindung des Fensterhebemechanismus mit dem Türinnenblech (31, 131, 331) und einen im Wesentlichen unperforierten oder unperforierten Abschnitt hat, der nach der Befestigung der Fensterhebeanordnung (11, 111, 211) am Türinnenblech (31, 131, 331) zum Verschließen der Öffnung (33, 133, 333) dient, aufweist, **dadurch gekennzeichnet, dass** die Länge der oder jeder länglichen Führungsschiene (16, 18; 116; 216, 218; 316, 318) größer ist als die größte Abmessung der Öffnung (33, 133, 333) in jeglicher Richtung, was das Einführen der Fensterhebeanordnung (11, 111, 211) im Hohlraum (34, 334) und das Anbringen der Stützstruktur (13, 113, 313) an dem Türinnenblech (31, 131, 331) gestattet, und dass die Öffnung (33, 133, 333) so bezüglich der Ränder des Hohlraums (34, 334) angeordnet ist, dass die oder jede Führungsschiene (16, 18; 116; 216, 218; 316, 318) und die Stützstruktur (13, 113, 313) im Hohlraum (34, 334) um eine Achse gedreht werden können, die im Wesentlichen lotrecht zum Türinnenblech (31, 131, 331) verläuft.

2. Türanordnung nach Anspruch 1, bei der die Öffnung (33, 133, 333) eine unregelmäßige Gestalt hat und beträchtlich länger als breit ist.

3. Türanordnung nach einem der vorhergehenden Ansprüche, bei der die oder jede Führungsschiene (16, 18; 116; 216, 218; 316, 318) länger als ein mittlerer Abschnitt (14, 114, 214, 314) der Stützstruktur (13, 113, 213, 313) ist.

4. Türanordnung nach einem der vorhergehenden Ansprüche, bei der die oder jede Führungsschiene (16, 18; 116; 216, 218; 316, 318) und die Stützstruktur (13, 113, 213, 313) als ein einzelnes einstückiges Teil ausgebildet sind.

5. Türanordnung nach einem der vorhergehenden Ansprüche, bei der zwei Führungsschienen (16, 18; 216, 218; 316, 318) durch die Stützstruktur (13, 213, 313) verbunden sind.

6. Türanordnung nach Anspruch 5, bei der sich beide Führungsschienen (16, 18; 216, 218; 316, 318) über den oberen und den unteren Rand des mittleren Abschnitts (14, 114, 214, 314) der Stützstruktur (13, 113, 213, 313) hinaus erstrecken.

7. Türanordnung nach einem der vorhergehenden Ansprüche, bei der ein Dichtmittel (19, 119, 219, 319) zur Bildung einer Dichtung zwischen der Stützstruktur (13, 113, 213, 313) und dem Türinnenblech (31, 131, 331) vorgesehen ist.

8. Verfahren zur Montage einer Kraftfahrzeugtüranordnung nach einem der Ansprüche 1 bis 7, **dadurch gekennzeichnet, dass** man
(i)- ein Türinnenblech (31, 131, 331), das eine Öffnung (33, 133, 333) definiert, und ein Türaußenblech (32, 132) vorsieht,
(ii)- das Türaußenblech (32, 332) und das Türinnenblech (31, 131, 331) miteinander verbindet, um zwischen ihnen einen Hohlraum (34, 334) zu definieren,
(iii)- eine Fensterhebeanordnung (11, 111, 211) mit einem Fensterhebemechanismus vorsieht, der mindestens ein Trägermittel (28, 128), das im Gebrauch mit einem unteren Rand einer Fensterscheibe (6) verbunden wird, und mindestens eine längliche Führungsschiene (16, 18; 116; 216, 218; 316, 318) umfasst, und mit einer Stützstruktur (13, 113, 313) zur Verbindung der Fensterhebeanordnung (11, 111, 211) mit dem Türinnenblech (31, 131, 331) und mit einem im Wesentlichen unperforierten oder unperforierten Abschnitt, wobei die Länge der oder jeder länglichen Führungsschiene (16, 18; 116; 216, 218; 316, 318) größer ist als die größte Abmessung der Öffnung (33, 133, 333) in jeglicher Richtung, was das Einführen der Fensterhebeanordnung (11, 111, 211) im Hohlraum (34, 334) und das Anbringen der Stützstruktur (13, 113, 313) an dem Türinnenblech (31, 131, 331) gestattet, wobei die Öffnung (33, 133, 333) so bezüglich der Ränder des Hohlraums (34, 334) angeordnet ist, dass die oder jede Führungsschiene (16, 18; 116; 216, 218; 316, 318) und die Stützstruktur (13, 113, 313) im Hohlraum (34, 334) um eine Achse gedreht werden können, die im Wesentlichen lotrecht zum Türinnenblech (31, 131, 331) verläuft,
(iv)- die oder jede Führungsschiene (16, 18; 116; 216, 218; 316, 318) und die Stützstruktur (13, 113, 213, 313) durch die im Türinnenblech ausgebildete Öffnung (33, 133, 333) einführt, um die gesamte Fensterhebeanordnung (11, 111), außer der Motor- und Antriebsanordnung (126), im Hohlraum (34, 334) anzuordnen,
(v)- die oder jede Führungsschiene (16, 18; 116; 216, 218; 316, 318) und die Stützstruktur (13, 113, 213, 313) aus dem Winkel, unter dem sie durch die Öffnung eingeführt wurden, in eine Gebrauchsposition dreht und
(vi)- die Fensterhebeanordnung (11, 111) über die Stützstruktur (13, 113, 213, 313) am Türinnenblech (31, 131, 331) befestigt, um die Öffnung (33, 133, 333) zu verschließen.

## Revendications

1. Ensemble de porte de véhicule à moteur comprenant un panneau intérieur de porte (31, 131, 331) définissant une découpe (33, 133, 333) et un panneau extérieur de porte (32, 132) joints l'un à l'autre pour définir un caisson de porte (34, 334), un ensemble de lève-glace (11, 111, 211) comprenant un mécanisme de lève-glace comportant au moins un moyen de support de glace (28, 128) pour la connexion lors de l'utilisation au bord inférieur d'une glace de porte (6) et au moins une glissière allongée (16, 18 ; 116 ; 216 ; 218 ; 316 ; 318), la ou chaque glissière étant, lors de l'utilisation, située à l'intérieur du caisson de porte (34, 334) pour guider le moyen de support de glace (28, 128) le long de la longueur de la ou de chaque glissière allongée (16, 18 ; 116 ; 216 ; 218 ; 316 ; 318), entre des positions relevées et abaissées, et une structure de support (13, 113, 313) pour connecter le mécanisme de lève-glace au panneau intérieur de porte (31, 131, 331) et comportant une partie sensiblement non perforée ou sans perforation utilisée pour obturer la découpe (33, 133, 333) quand l'ensemble de lève-glace (11, 111, 211) est fixé au panneau intérieur de porte (31, 131, 331), **caractérisé en ce que** la longueur de la ou de chaque glissière (16, 18 ; 116 ; 216, 218 ; 316, 318) est supérieure à la dimension maximum dans n'importe quelle direction de la découpe (33, 133, 333), ce qui permet l'insertion de l'ensemble de lève-glace (11, 111, 211) à l'intérieur du caisson de porte (34, 334) et la fixation de la structure de support (13, 113, 313) au panneau intérieur de porte (31, 131, 331) et **en ce que** ladite découpe (33, 133, 333) est positionnée par rapport aux bords du caisson de porte (34, 334) de manière à permettre que la ou chaque glissière (16, 18 ; 116 ; 216, 218 ; 316, 318) et la structure de support (13, 113, 313) puissent tourner à l'intérieur du caisson de porte (34, 334) autour d'un axe qui est sensiblement normal au panneau intérieur de porte (31, 131, 331).

2. Ensemble de porte selon la revendication 1, dans lequel la découpe (33, 133, 333) a une forme irrégulière et est considérablement plus longue que large.

3. Ensemble de porte selon l'une quelconque des revendications précédentes, dans lequel la ou chaque glissière (16, 18 ; 116 ; 216, 218 ; 316, 318) est plus longue qu'une partie centrale (14, 114, 214, 314) de la structure de support (13, 113, 213, 313).

4. Ensemble de porte selon l'une quelconque des revendications précédentes, dans lequel la ou chaque glissière (16, 18 ; 116 ; 216, 218 ; 316, 318) et la structure de support (13, 113, 213, 313) sont formées en tant que composant d'une seule pièce.

5. Ensemble de porte selon l'une quelconque des revendications précédentes, dans lequel il y a deux glissières (16, 18 ; 216, 218 ; 316, 318) jointes l'une à l'autre par la structure de support (13, 213, 313).

6. Ensemble de porte selon la revendication 5, dans lequel les deux glissières (16, 18 ; 216, 218 ; 316, 318) s'étendent au-delà des bords supérieur et inférieur de la partie centrale (14, 114, 214, 314) de la structure de support (13, 113, 213, 313).

7. Ensemble de porte selon l'une quelconque des revendications précédentes, dans lequel un moyen d'étanchéité (19, 119, 219, 319) est prévu pour former une barrière d'étanchéité entre la structure de support (13, 113, 213, 313) et le panneau intérieur de porte (31, 131, 331).

8. Procédé d'assemblage d'un ensemble de porte de véhicule à moteur selon l'une quelconque des revendications 1 à 7, **caractérisé en ce que** le procédé comprend les étapes consistant à :
(i) - mettre à disposition un panneau intérieur de porte (31, 131, 331) définissant une découpe (33, 133, 333) et un panneau extérieur de porte (32, 132);
(ii) - joindre l'un à l'autre le panneau extérieur de porte (32, 332) et le panneau intérieur de porte (31, 131, 331) pour définir un caisson de porte (34, 334) entre les deux ;
(iii) - mettre à disposition un ensemble de lève-glace (11, 111, 211) comprenant un mécanisme de lève-glace comportant au moins un moyen de support de glace (28, 128) pour la connexion lors de l'utilisation au bord inférieur d'une glace de porte (6) et au moins une glissière allongée (16, 18 ; 116 ; 216, 218 ; 316 , 318) et comprenant une structure de support (13, 113, 313) pour connecter l'ensemble de lève-glace (11, 111, 211) au panneau intérieur de porte (31, 131, 331) et comportant une partie sensiblement non perforée ou sans perforation, la longueur de la ou de chaque glissière (16, 18 ; 116 ; 216, 218 ; 316, 318) étant supérieure à la dimension maximum dans n'importe quelle direction de la découpe (33, 133, 333), ce qui permet l'insertion de l'ensemble de lève-glace (11, 111, 211) à l'intérieur du caisson de porte (34, 334) et la fixation de la structure de support (13, 113, 313) au panneau intérieur de porte (31, 131, 331), la découpe (33, 133, 333) étant positionnée par rapport aux bords du caisson de porte (34, 334) de manière à permettre que la ou chaque glissière (16, 18 ; 116 ; 216, 218 ; 316, 318) et la structure de support (13, 113, 313) puissent tourner à l'intérieur du caisson de porte (34, 334) autour d'un axe qui est sensiblement normal au panneau intérieur de porte (31, 131, 331);
(iv) - insérer la ou chaque glissière (16, 18 ; 116 ; 216, 218 ; 316, 318) et la structure de support (13, 113, 213, 313) à travers la découpe (33, 133, 333) pratiquée dans le panneau intérieur de porte de manière à situer l'ensemble de lève-glace complet (11, 111) à l'exception de l'ensemble moteur et entraînement (126), dans le caisson de porte (34, 334);
(v) - faire tourner la ou chaque glissière (16, 18 ; 116 ; 216, 218 ; 316, 318) et la structure de support (13, 113, 213, 313) depuis leur angle d'insertion à leur angle d'utilisation ; et
(vi) - fixer l'ensemble de lève-glace (11, 111) au panneau intérieur de porte (31, 131, 331) au moyen de la structure de support (13, 113, 213, 313) de manière à obturer la découpe (33, 133, 333).
